# EUROPÄISCHE PATENTSCHRIFT

(11) **EP 1 191 994 B1**
(45) Veröffentlichungstag und Bekanntmachung des Hinweises auf die Patenterteilung: **11.05.2005**
(21) Anmeldenummer: 00947841.3
(22) Anmeldetag: 10.06.2000
(51) Int. Cl.: B01D 46/24, F02M 35/024

(54) **Luftfilter für eine Brennkraftmaschine**
Air filter for an internal combustion engine
Filtre à air pour moteur à combustion interne

(30) Priorität: 02.07.1999 DE 19930614
(43) Veröffentlichungstag der Anmeldung: 03.04.2002
(73) Patentinhaber: Mann + Hummel GmbH, 71638 Ludwigsburg (DE)
(72) Erfinder: ANDRESS, Heinz, D-71729 Erdmannhausen (DE); LUKA, Helmut, D-71672 Marbach (DE); ÜBELHÖR, Bertram, D-71334 Waiblingen (DE); MAYER, Gerhard, D-74385 Pleidelsheim (DE); BLOSSEY, Werner, D-71726 Benningen (DE)
(74) Vertreter: Voth, Gerhard, Dipl.-Ing.
(86) Internationale Anmeldenummer: PCT/EP2000/005373
(87) Internationale Veröffentlichungsnummer: WO 2001/002079

(56) Entgegenhaltungen:
- EP-A- 0 664 389
- WO-A-00/01464
- WO-A-98/42429
- DE-A- 3 140 128
- US-A- 5 882 367

## Beschreibung

Die Erfindung betrifft einen Luftfilter für eine Brennkraftmaschine.

Ein solcher Filter ist beispielsweise aus der WO 95/19832 bekannt. Der Luftfilter besitzt einen Filtereinsatz, dieser ist in einem Gehäuse angeordnet, welches einen Rohluftzutritt sowie einen Reinluftaustritt aufweist. Ein solches Filter dient der Reinigung von Ansaugluft einer Brennkraftmaschine. Der Filtereinsatz wird in regelmäßigen Intervallen ausgetauscht. Es ist daher erforderlich, den Filtereinsatz möglichst kostengünstig herzustellen. Außerdem muß gewährleistet sein, daß der Filtereinsatz einfach zu demontieren und einfach zu montieren ist und femer eine zuverlässige Dichtwirkung zwischen dem Rohluftbereich und dem Reinluftbereich erzielt.

Der bekannte Filtereinsatz wird zwischen zwei konzentrischen Flächen des Filtergehäuses eingespannt, die Einspannung ist gleichzeitig die Abdichtung, wobei auch bei Erschütterungen oder Schwingungen eine zuverlässige Abdichtung gewährleistet sein muß.

Ein Nachteil dieses Systems ist darin zu sehen, daß jeder Filtereinsatz gewisse Längentoleranzen aufweist. Dies führt dazu, daß die Einspannung des Filtereinsatzes in dem Gehäuse, je nach Längenmaßverhältnis, mit einer größeren oder geringeren Spannkraft erfolgt. Eine zu große Spannkraft bewirkt eine Deformation des Filtereinsatzes, eine zu geringe Spannkraft schafft Dichtungsprobleme des Filtereinsatzes bei Schwingungen.

Die WO 97/22795 zeigt ein Luftfilterelement für einen Luftfilter mit einem Filtereinsatz, welcher über ein im Innern des Gehäuses angeordnetes Mittelrohr geschoben wird. Die dem Reinluftauslass zugewandte Stirnseite weist einen Dichtwulst auf, wobei der Dichtwulst auf der Dichtfläche des Mittelrohres abdichtend anliegt und eine Radialdichtung bildet. Beim Einsetzen in das Gehäuse gelangt der Filtereinsatz durch die axialtolerante Dichtung am Mittelrohr automatisch in die richtige Einbauposition.

Der Erfindung liegt die Aufgabe zugrunde, die genannten Nachteile zu vermeiden und einen Luftfilter zu schaffen, welcher geeignet ist, eine zuverlässige Abdichtung zwischen Rohluftraum und Reinluftraum bei unterschiedlichen Betriebsbedingungen herzustellen. Ferner liegt die Aufgabe in der Schaffung eines Filtereinsatzes für den genannten Luftfilter und in der Schaffung eines Filtergehäuses.

Diese Aufgabe wird durch die Merkmale des Anspruchs 1 bzw. der Ansprüche 6 und 9 gelöst.

Der wesentliche Vorteil der Erfindung ist darin zu sehen, daß die Funktionen Befestigen des Filtereinsatzes in Gehäuse und Abdichtung zwischen Rohluftraum und Reinluftraum getrennt werden. Die Befestigung bzw. Fixierung des Filtereinsatzes wird über einen Stützkörper vorgenommen, welcher Anlageflächen aufweist, die Abdichtung zwischen Rohluftraum und Reinluftraum erfolgt über ein Abdichtelement, welches sich im Bereich des Stützkörpers befindet. Der Stützkörper ist in bevorzugter Weise ein hohlzylindrisches und gelochtes Element und besteht aus einem Spritzgießkunststoff. Ein solches Element kann mit hoher Genauigkeit hergestellt werden, damit besteht kein Erfordernis einer Toleranzkompensation. Eine eventuelle Längentoleranz des Filtereinsatzes wirkt sich damit nicht auf die Abdichtfunktion des Abdichtelements aus.

Gemäß einer Weiterbildung der Erfindung ist vorgesehen, das Abdichtelement und die Endscheibe des Filtereinsatzes zu einem einzigen Bauteil zusammenzufassen, hier bietet sich die Verwendung von Polyurethanschaum an, da dieser eine hohe Elastizität aufweist. Ein weiterer Vorteil bei der Verwendung von Polyurethanschaum liegt in der einfachen thermischen Entsorgbarkeit nach dem Gebrauch des Filtereinsatzes.

Eine weitere Ausgestaltung der Erfindung sieht vor, den Filtereinsatz auf der dem Reinluftstutzen gegenüberliegenden Seite mit dem Stützkörper unmittelbar oder mittelbar an der Gehäusewand oder einem Deckel abzustützen. Zusätzliche Stützelemente oder Befestigungsmittel sind nicht erforderlich.

Eine weitere Ausgestaltung der Erfindung betrifft die Staubvorabscheidung. Im Bereich des Rohlufteinlasses ist ein Axialzyklon angeordnet, dieses versetzt die zugeführte Rohluft in eine Drallströmung, so daß sich Grobstaub an der Innenwandung des Gehäuses niederschlägt und von dort beispielsweise über ein Austragventil abtransportiert werden kann.

Gemäß dem Anspruch 9 betrifft die Erfindung ein Filtergehäuse für einen im Wesentlichen zylindrischen Filtereinsatz, wobei das Filtergehäuse einen Rohlufteintritt und einen Reinluftaustritt aufweist. Das Filtergehäuse ist mit einem Stutzen im Bereich des Reinluftauslasses versehen. An diesem Stutzen wird ein Filtereinsatz über einen inneren Stützkörper fixiert, wobei der innere Stützkörper im Bereich des Stutzens Anlageflächen zur axialen und radialen Positionierung aufweist.

Es ist weiterhin an dem Filtereinsatz ein Abdichtelement vorgesehen, mit welchem die Abdichtung zwischen Rohluftraum und Reinluftraum erfolgt.

Der Filtereinsatz kann gemäß einer vorteilhaften Ausgestaltung mit einem Dichtungssystem ausgestattet sein, das unterschiedlich hartes Kunststoffmaterial verwendet. So kann der Dichtwulst beispielsweise eine sehr geringe Shorehärte (20 bis 30) und die Endscheibe aus einem harten Kunststoffmaterial mit einer Shorehärte von beispielsweise 40 bis 60 bestehen. Dadurch wird einerseits ein stabiler Filtereinsatz geschaffen, andererseits eine gute Abdichtwirkung erzielt.

Eine weitere Ausgestaltung sieht vor, anstelle eines Abschlusses im Stützrohr, an dem, der Reinluftöffnung gegenüber liegenden Seite, einen umlaufenden Dichtungswulst vorzusehen. Dieser Dichtungswulst legt sich an den Deckel an und bildet eine zuverlässige Abdichtung zwischen Rohluftraum und Reinluftraum.

Diese und weitere Merkmale von bevorzugten Weiterbildungen der Erfindung gehen außer aus den Ansprüchen auch aus der Beschreibung und den Zeichnungen hervor.

Die Erfindung wird nachfolgenden anhand eines Ausführungsbeispiels näher erläutert.

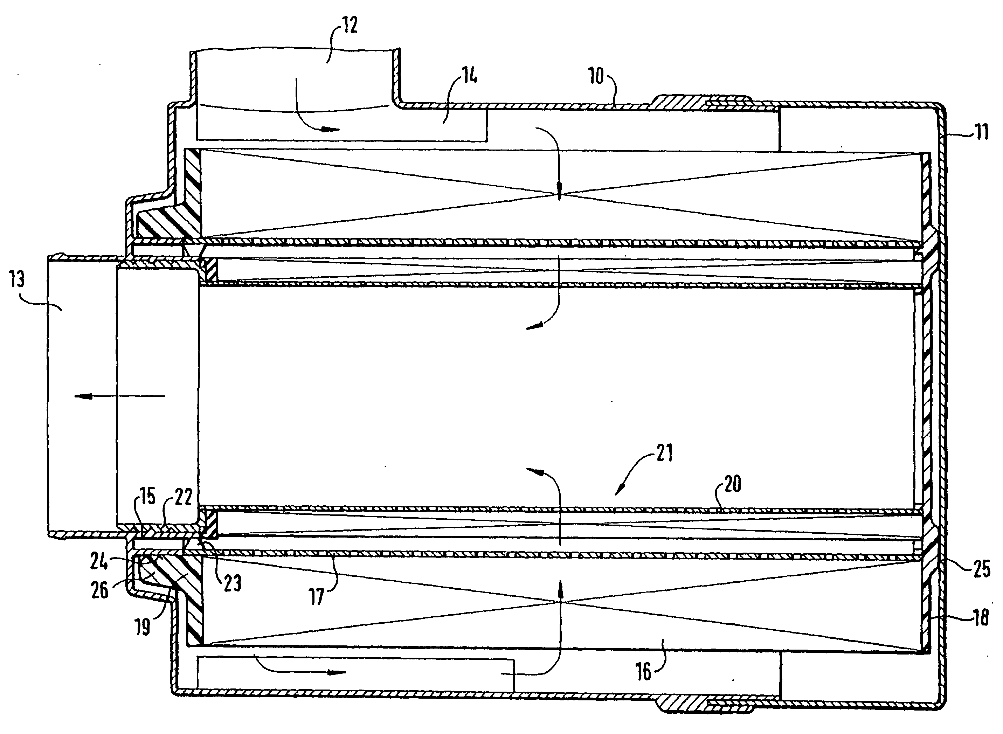

Die Figur zeigt ein Luftfilter in einer Schnittdarstellung.

Das Luftfilter gemäß der Schnittdarstellung besteht aus einem Filtergehäuse 10, welches mit einem Deckel 11 verschlossen wird. Am Filtergehäuse 10 befindet sich ein Rohlufteinlass 12, sowie an der, dem Deckel 11 gegenüberliegenden Stirnseite ein Reinluftauslass 13. Im Filtergehäuse 10 ist am Innenumfang ein Axialzyklon 14 vorgesehen, im Bereich des Reinluftauslasses 13 ist ein konzentrischer Stutzen 15 angeordnet der sich nach innen in den Gehäuseinnenraum erstreckt. Im Filtergehäuse 10 befindet sich ein Filtereinsatz 16, dieser besteht aus einem zickzackförmig gefalteten Filtermittel, beispielsweise Filterpapier, welches auf ein Stützkörper 17 angeordnet ist. Die Stirnseiten des Filtereinsatzes 16 sind mit elastischen Endscheiben 18,19 versehen. In dem Gehäuse befindet sich femer noch ein Sicherheitsfilterelement 21, dieses besteht ebenfalls aus einem zickzackförmigen Filtereinsatz 20. Dieses Sicherheitsfilterelement 21 ist über einen Befestigungsstutzen 22 im Reinluftauslass 13 angeordnet. Der Stützkörper 17 des Filtereinsatzes 16 ist an dem, dem Reinluftausgang zugewandten Ende mit Anlageflächen 23 versehen. Diese stützen sich auf dem Stutzen 15 des Reinluftauslasses ab und bewirken damit die radiale Fixierung des Filtereinsatzes 16. Der Stützkörper 17 liegt axial auf Anschlag an einer Anlageringfläche 24, damit wird die axiale Lage des Filtereinsatzes definiert. Auf der dem Deckel zugewandten Seite des Filtereinsatzes geht der Stützkörper 17 unmittelbar in die Endscheibe 18 über, die Endscheibe 18 weist ebenfalls Anlageflächen 25 auf, die mit dem Deckel 11 zusammenwirken und eine Axialbewegung des Filtereinsatzes verhindern. Die Endscheibe 19 ist mit einem Dichtkragen 26 versehen, dieser Dichtkragen liegt auf der Anlageringfläche 24 auf und sorgt für die Abdichtung zwischen Rohluftraum und Reinluftraum. Damit ist die Endscheibe und insbesondere der Dichtkragen 26 nicht mechanisch mit dem Stützkörper 17 verbunden.

Ein Vorteil dieser Gestaltung liegt darin, daß der eingebaute Filtereinsatz 16 keine Spannkräfte aufnehmen muß, lediglich der Stützkörper 17 übemimmt die Verspannung des Filtereinsatzes. Der gesamte Filtereinsatz 16 befindet sich damit in einem kräftefreien Zustand. Die dem Rohlufteinlass zugeführte Luft strömt gemäß den in der Figur gezeigten Pfeilen durch den Filtereinsatz 16 sowie durch das Sicherheitselement 21 und verläßt gereinigt den Reinluftauslass 13.

## Patentansprüche

1. Luftfilter für eine Brennkraftmaschine mit einem Gehäuse (10,11) und einem darin angeordneten hohlzylindrischen Filtereinsatz (16), wobei das Gehäuse einen Rohlufteinlass (12) und einen Reinluftauslass (13) aufweist, wobei ein Stutzen (15) im Bereich des Reinluftauslasses vorgesehen ist und der Stutzen sich nach innen in den Gehäuseinnenraum erstreckt, wobei vom Gehäuse in den Gehäuseinnenraum sich erstreckend ein Anlagering (24) den Stutzen (15) konzentrisch umgibt, wobei der hohlzylindrische Filtereinsatz (16), der insbesondere aus seinem zickzackförmig gefaltetem Filtermedium besteht, an stimseitigen Endscheiben (18, 19) mit Dichtungselementen versehen ist und an der Innenwandung des Filtereinsatzes ein Stützkörper (17) integriert ist, wobei an dem dem Reinluftauslass (13) zugewandten Ende des Filtereinsatzes an dem Stützkörper Anlageflächen (23) zu radialen Fixierung des Filtereinsatzes auf dem Stutzen (15) vorgesehen sind, wobei der Stützkörper (17) zur axialen Fixierung des Filtereinsatzes auf Anschlag an der vom Anlagering (24) gebildeten Anlageringfläche anliegt, und wobei das dem Reinluftauslass (13) zugewandte Ende des Filtereinsatzes ein sich in axialer Richtung über den Stützkörper (17) und die Anlageflächen (23) erstreckendes Abdichtelement (26) vorgesehen ist, welches an dem Anlagering (24) anliegt.

2. Luftfilter nach Anspruch 1, wobei das Abdichtelement (26) mit der Endscheibe (19) eine bauliche Einheit bildet.

3. Luftfilter nach Anspruch 1 oder 2, wobei sich der Filtereinsatz an dem, dem Reinluftausgang gegenüberliegenden Ende in axialer Richtung an einer Gehäusewandung oder einem Deckel (11) abstützt.

4. Luftfilter nach Anspruch 3, wobei die Abstützung mittelbar oder unmittelbar über den Stützkörper (17) erfolgt.

5. Luftfilter nach einem der vorherigen Ansprüche, wobei im Eintrittsbereich der Rohluft ein Axialzyklon (14) angeordnet ist.

6. Filtereinsatz für einen Luftfilter gemäß einem der Ansprüche 1 bis 5, bestehend aus einem ringförmig zu einem Hohlzylinder zusammengefassten, insbesondere zickzackförmig gefaltetem Filtermedium, welcher an stirnseitigen Endscheiben mit Dichtungselementen versehen ist, wobei an der Innenwandung des Filtereinsatzes ein Stützkörper integriert ist, wobei an dem dem Reinluftauslass zugewandten Ende des Filtereinsatzes an dem Stützkörper Anlageflächen zur radialen Fixierung des Filtereinsatzes auf dem Stutzen des Gehäuses vorgesehen sind, wobei der Stützkörper zur axialen Fixierung des Filtereinsatzes derart ausgebildet ist, dass er auf Anschlag an der vom Anlagering des Gehäuses gebildeten Anlageringfläche anliegt, wobei an den dem Reinluftauslass zugewandten Ende des Filtereinsatzes ein sich über dem Stützkörper und die Anlageflächen (23) erstreckendes Abdichtelement (26) zur Anlage an dem Anlagering vorgesehen ist.

7. Filtereinsatz nach Anspruch 6, wobei das Abdichtelement (26) eine, gegenüber der Endscheibe (19) geringere Shorehärte aufweist.

8. Filtereinsatz nach Anspruch 6, wobei die Endscheibe (19) mit den Anlageflächen (23) eine bauliche Einheit bildet.

9. Filtergehäuse für einen Filtereinsatz gemäß einem der Ansprüche 6-8, wobei das Gehäuse einen Rohlufteinlass (12) und Reinluftauslass (13) aufweist, wobei ein Stutzen im Bereich des Reinluftauslasses vorgesehen ist und der Stutzen sich nach innen in den Gehäuseinnenraum erstreckt, wobei vom Gehäuse in den Gehäuseinnenraum sich erstreckend ein Anlagering (24) den Stutzen konzentrisch umgibt, wobei der Stutzen zur radialen Fixierung und der Anlagering zur axialen Fixierung des Filtereinsatzes vorgesehen ist und der Anlagering außerdem zur Anlage des Abdichtelementes des Filtereinsatzes vorgesehen ist.

## Claims

1. Air filter for an internal combustion engine including a housing (10, 11) and a hollow cylindrical filter insert (16) disposed therein, wherein the housing includes an unfiltered air inlet (12) and a filtered air outlet (13), wherein a connecting piece (15) is provided in the region of the filtered air outlet and the connecting piece extends inwards into the housing interior, wherein a contact ring (24) extending from the housing into the housing interior surrounds the connector piece (15) in a concentric manner, wherein the hollow cylindrical filter insert (16), which is produced more especially from its filter medium folded in a zigzag manner, is provided with sealing elements on end discs (18, 19) at the ends and a supporting body (17) is incorporated on the inside wall of the filter insert, wherein at the end of the filter insert facing the filtered air outlet (12) contact faces (23) are provided on the supporting body for the securing of the filter insert in a radial manner on the connector piece (15), wherein the supporting body (17),'for the axial securing of the filter insert, on impact abuts against the contact ring face formed by the contact ring (24), and wherein the end of the filter insert facing the filtered air outlet (13) is provided with a sealing element (26), which extends in the axial direction over the supporting body (17) and the contact faces (23), said sealing element (26) abutting against the contact ring (24).

2. Air filter according to claim 1, wherein the sealing element (26) and the end disc (19) form one structural unit.

3. Air filter according to claim 1 or 2, wherein the filter insert is supported on a housing wall or a cover (11) in the axial direction at the end situated opposite to the filtered air outlet.

4. Air filter according to claim 3, wherein the supporting is directly or indirectly effected by means of the supporting body (17).

5. Air filter according to one of the preceding claims, wherein an axial cyclone (14) is disposed in the inlet region of the unfiltered air.

6. Filter insert for an air filter according to one of claims 1 to 5, comprising a filter medium, which is assembled in an annular manner to form a hollow cylinder, more especially is folded in a zigzag manner and is provided at each end with sealing elements on end discs, wherein a supporting body is incorporated on the inside wall of the filter insert, wherein at the end of the filter insert facing the filtered air outlet contact faces are provided on the supporting body for securing the filter insert in a radial manner on the connecting piece of the housing, wherein the supporting body, for the axial securing of the filter insert, is configured in such a manner that said supporting body abuts on impact against the contact ring face formed by the contact ring of the housing, wherein a sealing element (26), which extends over the supporting body and the contact faces (23) at the end of the filter insert facing the filter air outlet, is provided to abut against the contact ring.

7. Filter insert according to claim 6, wherein the Shore hardness of the sealing element (26) is less that that of the end disc (19).

8. Filter insert according to claim 6, wherein the end disc (19) and the contact faces (23) form one structural unit.

9. Filter housing for a filter insert according to one of claims 6 - 8, wherein the housing includes an unfiltered air inlet (12) and a filtered air outlet (13), wherein a connecting piece is provided in the region of the filtered air outlet and the connecting piece extends inwards into the housing interior, wherein a contact ring (24), which extends from the housing into the housing interior, surrounds the connecting piece in a concentric manner, wherein the connecting piece is provided for the radial securing and the contact ring for the axial securing of the filter insert and the contact ring is provided in addition for the installation of the sealing element of the filter insert.

## Revendications

1. Filtre à air pour moteur à combustion interne, comprenant un boîtier (10, 11) et une cartouche filtrante (16) cylindrique creuse insérée dans celui-ci, le boîtier présentant une entrée d'air brut (12) et une sortie d'air propre (13), dans lequel
- un appui (15) prévu dans la zone de la sortie d'air propre s'étend vers l'intérieur du boîtier, avec une bague d'appui (24) s'étendant du boîtier dans l'intérieur du boîtier et qui entoure l'appui (15) concentriquement,
- la cartouche filtrante (16) cylindrique creuse, composée notamment par son moyen filtrant plié en zigzag, est munie d'éléments d'étanchéité au niveau de disques d'extrémité (18, 19) côté frontal,
- dans la paroi intérieure de la cartouche filtrante un corps de support (17) est intégré, avec pour la fixation radiale de la cartouche filtrante sur l'appui (15), des surfaces d'appui (23) prévues sur le corps de support à l'extrémité de la cartouche filtrante à l'opposée de la sortie d'air propre, et
- le corps de support (17) repose en butée sur la surface d'appui annulaire formée par la bague d'appui (24) pour la fixation axiale de la cartouche filtrante, avec à l'extrémité de la cartouche filtrante à l'opposé de la sortie d'air propre un élément d'étanchéité (26) qui s'étend dans la direction axiale sur le corps de support (17) et sur les surfaces d'appui (23), et qui s'appuie sur la bague d'appui (24).

2. Filtre à air selon la revendication 1,
**caractérisé en ce que**
l'élément d'étanchéité (26) forme un ensemble de construction avec le disque d'extrémité (19).

3. Filtre à air selon la revendication 1 ou 2,
**caractérisé en ce que**
la cartouche filtrante est maintenue dans la direction axiale sur une paroi de boîtier ou un couvercle (11) au niveau de l'extrémité à l'opposé de la sortie d'air propre.

4. Filtre à air selon la revendication 3,
**caractérisé en ce que**
le maintien est assuré indirectement ou directement par l'intermédiaire du corps de support (17).

5. Filtre à air selon l'une quelconque des revendications précédentes,
**caractérisé en ce qu'**
un cyclone axial (14) est disposé dans la zone d'entrée d'air brut.

6. Cartouche filtrante pour un filtre à air selon l'une quelconque des revendications 1 à 5, composée par un moyen filtrant notamment plié en zigzag formant un cylindre creux annulaire qui est muni, au niveau de disques d'extrémité côte frontal, d'éléments d'étanchéité,
dans laquelle
- dans la paroi intérieure de la cartouche filtrante un corps de support est intégré, avec pour la fixation radiale de la cartouche filtrante sur l'appui du boîtier, des surfaces d'appui prévues sur le corps de support à l'extrémité de la cartouche filtrante à l'opposé de la sortie d'air propre,
- le corps de support, pour la fixation axiale de la cartouche filtrante, est conçu de manière à reposer en butée sur la surface d'appui annulaire formée par la bague d'appui du boîtier, et
- à l'extrémité de la cartouche filtrante à l'opposé de la sortie d'air propre un élément d'étanchéité (26) s'étend sur le corps de support (17) et sur les surfaces d'appui (23), et s'appuie sur la bague d'appui.

7. Cartouche filtrante selon la revendication 6,
**caractérisée en ce que**
l'élément d'étanchéité (26) présente une dureté Shore inférieure à celle du disque d'extrémité (19).

8. Cartouche filtrante selon la revendication 6,
**caractérisée en ce que**
le disque d'extrémité (19) forme un ensemble de construction avec les surfaces d'appui (23).

9. Boîtier de filtre pour une cartouche filtrante selon l'une quelconque des revendications 6 à 8,
dans lequel
- le boîtier présente une entrée d'air brut (12) et une sortie d'air propre (13), et un appui prévu dans la zone de la sortie d'air propre s'étend vers l'intérieur du boîtier, avec une bague d'appui (24) s'étendant du boîtier dans l'intérieur du boîtier et qui entoure l'appui concentriquement, et
- l'appui est prévu pour la fixation radiale, la bague d'appui est prévue pour la fixation axiale de la cartouche filtrante, et la bague d'appui est en outre prévue pour recevoir l'élément d'étanchéité de la cartouche filtrante.
